# EUROPEAN PATENT SPECIFICATION

(11) **EP 0 348 368 B1**
(45) Date of publication and mention of the grant of the patent: **04.08.1993**
(21) Application number: 89850155.6
(22) Date of filing: 11.05.1989
(51) Int. Cl.: G06F 1/04, G06F 11/16

(54) **Method and apparatus for generating a start signal for parallel-synchronous operation of three identical data processing units**
Methode und Gerät zur Generation eines Startzeichens für Parallelsynchron-Betrieb von drei identischen Datenverarbeitungseinheiten
Méthode et dispositif pour la génération d'un signal de départ pour une opération parallèle-synchrone de trois éléments identiques

(30) Priority: 23.06.1988 SE 8802386
(43) Date of publication of application: 27.12.1989
(73) Proprietor: TELEFONAKTIEBOLAGET L M ERICSSON, 126 25 Stockholm (SE)
(72) Inventor: Petersen, Lars-Göran, S-147 00 Tumba (SE)
(74) Representative: Lövgren, Tage

(56) References cited:
- EP-A- 0 172 569
- EP-A- 0 287 539
- WO-A-85/04498
- US-A- 4 099 241
- US-A- 4 497 059

## Description

### TECHNICAL FIELD

The present invention relates to a method and an apparatus for generating a start signal for parallel-synchronous operation of three identical data processing units, resulting in that an array of three identical unit outputs during each data processing timing period assumes congruent binary states and that via a plurality of output arrays the units transmit a mutually like data word comprising a plurality of binary bits.

### BACKGROUND ART

An advertisement slogan for data processing systems including at least three identical data processing units points out that putting such redundant systems into operation takes place in the same way as with systems not having redundancy: input/output control terminals are connected to the process to be controlled, power is switched on and parallel-synchronous operation is automatically obtained, the advantages of this kind of operation being extremely high reliability, error tolerance and error analysis with the aid of majority selection.

However, experience shows that the above-mentioned conventional start-up with the aid of a general switch-on of voltage, i.e. a cold start, is often unsuccessful in systems with redundancy.

### DISCLOSURE OF INVENTION

According to the invention, consideration is paid to different conditions, which enable parallel-synchronous operation of three identical data processing units when all of the conditions are met. A first condition is that each data processing unit is serviceable, i.e. it is capable of performing correct data processing. Serviceability is usually checked with the aid of a test program which is applied to the data processing unit individually. A serviceability check is also obtained if the unit is ordered to process data while using suitable instruction sequences. A second condition is that the data processing units operate with exactly the same timing, which is achieved by such as a common timing generator and which results in that the units synchronously transmit individually computed data bits and data words including several bits, if the first condition is met.

If the first and second conditions are met, a third condition for parallel-synchronous operation is that the units execute in parallel exactly the same program instructions during each data processing timing period. For example, in the US-A-4099241 it is described how a processor-dual system is started for parallel-synchronous operation, special starting instructions being pointed out by a start signal in the right phase. U S -A- 4497059 discloses multi channel redundant processing systems and methods and means for providing parallel synchronous operation.

In accordance with the invention as claimed the start signal for parallel-synchronous operation is only generated if the units are capable, with the aid of individual random start-ups, of performing with the timing of the system different data processes being all different between themselves, which result in that the introductorily mentioned output arrays transmit different data words during the same timing period, i.e. if the first and second conditions are met. A word difference determined by comparison operations is then converted to the start signal for parallel-synchronous operation.

In a system with triple redundancy, a word used in generating the start signal must include at least two data bits, otherwise it is impossible to determine word difference during one timing period. The greater the number of bits per word the greater the probability of a rapid generation of the starting signal.

Starting up a system with triple redundancy is more reliable when the inventive start signal is used than when using the above-mentioned cold system start. The generating characteristics of this inventive signal are disclosed in the claims.

### BRIEF DESCRIPTION OF DRAWING

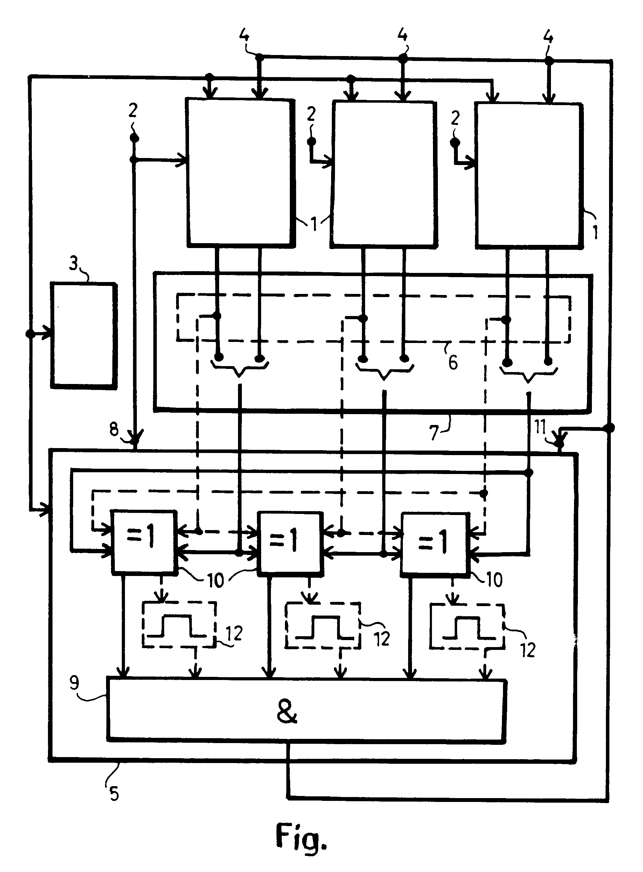

The invention will now be described in more detail, and with reference to the accompanying drawing, the sole Figure on which illustrates three data processing units 1, which are connected to a start signal generator 5 including an AND element 9 and three comparators 10.

### BEST MODE FOR CARRYING OUT THE INVENTION

Each of three substantially identical data processing units 1 is provided with a cold start terminal 2, and on receiving a cold start signal on this terminal it is capable of carrying out data processing with timing determined by a common timing generator 3. In addition, the units have start signal inputs 4 connected to a common start signal generator 5 for generating a start signal for the parallel-synchronous operation of the units. The drawing does not show the connections of the data processing units to the equipment, e.g. telecommunication equipment, which is controlled with the aid of the units, neither does it show the conventional unit parts, with which parallel-synchronous operation is achieved by the start signal. During a data processing timing period there is triple redundancy, if a plurality (the drawing shows two) output arrays 7 transmit an agreeing data word including a plurality of data bits.

However, due to random start-ups of the data processing units, mutually different data words are sent via the output arrays 7. Random start-ups are obtained if the terminals 2 of the units receive cold start signals during different timing periods and/or if random data processing instructions are pointed out in parallel in the units.

The start signal generator 5, which is connected to the timing generator 3 for operating synchronously with the data processing units 1, and which has its activating input 8 (in accordance with the drawing) connected to one of the cold start terminals 2, includes an AND-responsive binary logic element 9, the inputs of which are connected to three comparators 10 including EXOR-responsive logical elements. The output arrays 7 of the data processing units are connected to the inputs of the comparators 10 of the start signal generator such that the data word obtained from each data processing unit is compared with the two data words obtained during the same timing period from the two other units. The AND-element 9 converts a state "all data processing units different" determined by the comparators to a start signal, and has its output connected to the de-activating input 11 of the start signal generator and to the start signal inputs 4 of the data processing units.

In practice, the comparators 10 are also used for conventionally monitoring the parallel-synchronous operation of the data processing units by majority selection. In this case the start signal solely de-activates the AND element 9.

## Claims

1. A method of generating a start signal for initiating parallel-synchronous operation of three identical data processing units, comprising the steps of:
starting each data processing unit;
processing data in each data processing unit in parallel;
characterized by the following additional steps of:
generating from each data processing unit in parallel a multi bit data word as a result of the data processing in each unit respectively;
comparing the multi bit data word from each data processing unit with the multi bit data words from the other data processing units; and
generating a start signal to each data processing unit only if the multi bit data words from all three data processing units each differ from one another.

2. A start signal generator (5) for initiating a start signal for parallel-synchronous operation of three identical data processing units (1), each data processing unit (1) having a cold start terminal (2), a start signal input (4) and an output (7) for multi bit data words, the units (1) being connected to a common timing generator (3), the start signal generator (5) comprising: multi bit word comparators (10) connected to the multi bit word outputs (7) of the data processing units (1) and arranged for comparing the multi bit word from each data processing unit (1) with the multi bit words obtained from the other units (1) during the same timing period;
and logic means (9) connected for receiving outputs from the comparators (10) and for generating a start signal to the start signal inputs (4) only when the multi bit words from all three data processing units (1) each differ from one another.

## Patentansprüche

1. Verfahren zum Erzeugen eines Startsignals zum Initiieren eines Parallel-Synchron-Betriebs von drei identischen Datenverarbeitungseinheiten, umfassend die folgenden Schritte:
Starten jeder Datenverarbeitungseinheit;
paralleles Verarbeiten von Daten in jeder Datenverarbeitungseinheit;
**gekennzeichnet** durch die folgenden zusätzlichen Schritte:
paralleles Erzeugen eines Multibit-Datenwortes aus jeder Verarbeitungseinheit als Folge der Datenverarbeitung in jeder Einheit;
Vergleichen des Multibit-Datenworts von jeder Datenverarbeitungseinheit mit den Multibit-Datenwörtern von den anderen Datenverarbeitungseinheiten; und
Erzeugen eines Startsignals an jeder Datenverarbeitungseinheit nur, falls die Multibit-Datenwörter von allen drei Datenverarbeitungseinheiten sich jeweils voneinander unterscheiden.

2. Startsignal-Generator (5) zum Initiieren eines Startsignals für einen Parallel-Synchron-Betrieb von drei identischen Datenverarbeitungseinheiten (1), wobei jede Datenverarbeitungseinheit (1) einen Kaltstart-Anschluß (2), einen Startsignal-Eingang (4) und einen Ausgang (7) für Multibit-Datenwörter aufweist, wobei die Einheiten (1) mit einem gemeinsamen Zeitsteuerungs-Generator (3) verbunden sind, wobei der Startsignal-Generator (5) umfaßt: Multibitwort-Komparatoren (10), die mit den Multibitwort-Ausgängen (7) der Datenverarbeitungseinheiten (1) verbunden sind und angeordnet sind zum Vergleichen des Multibitworts von jeder Datenverarbeitungseinheit (1) mit den Multibitwörtern, die von den anderen Einheiten (1) während der gleichen Zeitperiode erhalten werden;
und eine Logikeinrichtung (9), die angeschlossen ist, um Ausgänge von den Komparatoren (10) zu erhalten und um ein Startsignal an den Startsignal-Eingängen (4) nur dann zu erzeugen, wenn die Multibitwörter von allen drei Datenverarbeitungseinheiten (1) sich jeweils voneinander unterscheiden.

## Revendications

1. Un procédé de génération d'un signal de démarrage pour déclencher le fonctionnement parallèle-synchrone de trois unités de traitement de données identiques, comprenant les étapes suivantes :
on fait démarrer chaque unité de traitement de données;
on traite des données en parallèle dans chaque unité de traitement de données;
caractérisé par les étapes supplémentaires suivantes :
on génère en parallèle à partir de chaque unité de traitement de données un mot de données à plusieurs bits, sous l'effet du traitement de données dans chaque unité respective;
on compare le mot de données à plusieurs bits provenant de chaque unité de traitement de données avec les mots de données à plusieurs bits qui proviennent des autres unités de traitement de données; et
on génère un signal de démarrage pour chaque unité de traitement de données seulement si les mots de données à plusieurs bits provenant de l'ensemble des trois unités de traitement de données sont mutuellement différents.

2. Un générateur de signal de démarrage (5) destiné à produire un signal de démarrage pour le fonctionnement parallèle-synchrone de trois unités de traitement de données identiques (1), chaque unité de traitement de données (1) ayant une borne de démarrage à froid (2), une entrée de signal de démarrage (4) et une sortie (7) pour des mots de données à plusieurs bits, les unités (1) étant connectées à un générateur d'horloge commun (3), le générateur de signal de démarrage (5) comprenant :
des comparateurs de mots à plusieurs bits (10) connectés aux sorties de mots à plusieurs bits (7) des unités de traitement de données (1), et conçus pour comparer le mot à plusieurs bits provenant de chaque unité de traitement de données (1) avec les mots à plusieurs bits qui sont obtenus à partir des autres unités (1) pendant le même intervalle de temps;
et des moyens logiques (9) qui sont connectés de façon à recevoir des signaux provenant des comparateurs (10), et à produire un signal de démarrage pour les entrées de signal de démarrage (4) seulement lorsque les mots à plusieurs bits provenant de l'ensemble des trois unités de traitement de données (1) sont mutuellement différents.
